# EUROPEAN PATENT APPLICATION

(11) **EP 3 467 402 A1**
(43) Date of publication of application: **10.04.2019**
(21) Application number: 17809897.6
(22) Date of filing: 06.03.2017
(51) Int. Cl.: F25B 9/06, F04D 29/048, F16C 21/00, F16C 33/76, F16C 39/06

(54) **ROTARY MACHINE**

(30) Priority: 07.06.2016 JP 2016113701
(71) Applicant: IHI Corporation, Tokyo 135-8710 (JP)
(72) Inventor: NAKAJIMA Masahiro, Tokyo 135-8710 (JP); YOSHINAGA Seiichiro, Tokyo 135-8710 (JP); FUJISAKU Katsuya, Tokyo 135-8710 (JP); ODA Kentarou, Tokyo 135-8710 (JP); IIDA Tsutomu, Tokyo 135-8710 (JP); KURIHARA Kazuaki, Tokyo 135-8710 (JP); HIRAI Hirokazu, Tokyo 142-8558 (JP); HIROKAWA Masaki, Tokyo 142-8558 (JP)
(74) Representative: Grünecker Patent- und Rechtsanwälte PartG mbB
(86) International application number: PCT/JP2017/008780
(87) International publication number: WO 2017/212713

(57) **Abstract**

A rotary machine includes a rotary shaft equipped with an axial disc; an axial magnetic bearing which supports the rotary shaft; a motor which rotates the rotary shaft; a turbine impeller mounted on one end portion side of the rotary shaft; a compressor impeller mounted on the other end portion side of the rotary shaft; a cooling gas flow passage through which a cooling gas for cooling the motor flows; and a housing which accommodates at least the motor, the axial magnetic bearing, and the axial disc. The motor is equipped with a rotor unit provided on the rotary shaft, and a stator unit facing the rotor unit, the axial disc is equipped with a pair of load receiving surfaces sandwiched between the axial magnetic bearings, and the cooling gas flow passage is equipped with a first flow passage between the rotor unit and the stator unit, and a second flow passage extending along at least one of the load receiving surface.

## Description

### Technical Field

The present invention relates to a rotary machine used in a refrigeration device which uses a gas containing at least neon as a working fluid.

### Background Art

A cryogenic refrigeration device which uses a gas containing neon as a working fluid is known (see Japanese Unexamined Patent Publication No. 2011-106755). Further, a rotary machine that rotates a compressor and a rotary shaft of an expansion turbine by a direct drive type driving system is known (Japanese Unexamined Patent Publication No. 2006-46699). In the rotary machine used in this type of refrigeration device, since an internal temperature of the machine rises due to a windage loss or a motor loss, a flow passage of the cooling gas is formed inside the machine to suppress the temperature rise.

### Citation List

### Patent Literature

Patent Literature 1: Japanese Unexamined Patent Publication No. 2011-106755
Patent Literature 2: Japanese Unexamined Patent Publication No. 2006-46699

### Summary of Invention

### Technical Problem

In a direct drive type drive system, in particular, when assuming a refrigeration system equipped with a rotary machine that supports a rotary shaft including an axial disc with an axial magnetic bearing, there is a need to consider a temperature rise caused by windage loss on an axial disc. However, in the conventional technique, a sufficient consideration has not been made on a scheme for suppressing the temperature rise on the axial disc.

The present disclosure describes a rotary machine capable of effectively suppressing a temperature rise caused by a windage loss on an axial disc.

### Solution to Problem

An aspect of the present disclosure is a rotary machine used in a refrigeration device which uses a gas containing at least neon as a working fluid, the rotary machine including: a rotary shaft equipped with an axial disc; an axial magnetic bearing which supports the rotary shaft; a motor which rotates the rotary shaft; a turbine impeller mounted on one end portion side of the rotary shaft; a compressor impeller mounted on the other end portion side of the rotary shaft; a cooling gas flow passage through which a cooling gas for cooling the motor flows; and a housing which accommodates at least the motor, the axial magnetic bearing, and the axial disc. The motor is equipped with a rotor unit provided on the rotary shaft, and a stator unit facing the rotor unit, the axial disc is equipped with a pair of load receiving surfaces sandwiched between the axial magnetic bearings, and the cooling gas flow passage is equipped with a first flow passage between the rotor unit and the stator unit, and a second flow passage extending along at least one of the load receiving surface.

### Advantageous Effects of Invention

According to the rotary machine of the present disclosure, it is possible to effectively suppress the temperature rise caused by the windage loss on the axial disc.

### Brief Description of Drawings

FIG. 1 is a system diagram illustrating an example of a cooling system including a rotary machine according to an embodiment of the present disclosure.
FIG. 2 is a diagram schematically illustrating the rotary machine according to a first embodiment, and illustrating the inside of a housing partially in a cross-section.
FIG. 3 is a cross-sectional view taken along line III-III of FIG. 2.
FIG. 4 is a cross-sectional view taken along line IV-IV of FIG 2.
FIG. 5 is a cross-sectional view taken along line V-V of FIG. 2.
FIG. 6 is a cross-sectional view taken along line VI-VI of FIG. 2.
FIG. 7 is an enlarged cross-sectional view illustrating a part including a touchdown bearing of a rotary machine.
FIG. 8 is an enlarged view of a portion indicated by a broken line arrow A of FIG. 7.
FIG. 9 is a view illustrating an example of a cooling gas flow passage of the rotary machine according to the first embodiment, schematically illustrating a flow of the cooling gas in the cooling gas flow passage.
FIG. 10 is a view illustrating an example of a cooling gas flow passage of a rotary machine according to a second embodiment, schematically illustrating a flow of a cooling gas in the cooling gas flow passage.
FIG. 11 is a view schematically illustrating each embodiment of a rotary machine based on the rotary machine according to the first embodiment.
FIG. 12 is a view schematically illustrating each embodiment based on the rotary machine according to the first embodiment, subsequent to FIG. 11.
FIG. 13 is a view schematically illustrating each embodiment of a rotary machine based on the rotary machine according to the second embodiment.
FIG. 14 is a diagram schematically illustrating each embodiment based on the rotary machine according to the second embodiment, subsequent to FIG. 13.

### Description of Embodiments

An aspect of the present disclosure is a rotary machine used in a refrigeration device which uses a gas containing at least neon as a working fluid, the rotary machine including: a rotary shaft having an axial disc; an axial magnetic bearing which supports the rotary shaft; a motor which rotates the rotary shaft, a turbine impeller mounted on one end portion side of the rotary shaft, a compressor impeller mounted on the other end portion side of the rotary shaft, a cooling gas flow passage through which the cooling gas for cooling the motor flows, and a housing which accommodates at least the motor, the axial magnetic bearing, and the axial disc, wherein the motor is provided with a rotor unit provided on the rotary shaft and a stator unit facing the rotor unit, the axial disc is provided with a pair of load receiving surfaces sandwiched between the axial magnetic bearings, and the cooling gas flow passage is provided with a first flow passage between the rotor unit and the stator unit, and a second flow passage extending along at least one of the load receiving surface.

This aspect includes a first flow passage through which the cooling gas passes between the rotor unit and the stator unit. That is, even if heat is generated by the motor loss occurring in the stator unit and the windage loss occurring between the rotor unit and the stator unit, the temperature rise is suppressed by the cooling gas passing through the first flow passage. Also, in a slight gap between the bearing receiving surface of the axial disc and the axial magnetic bearing, a windage loss occurs due to the rotation of the axial disc and heat is generated. However, according to this aspect, since the second flow passage through which the cooling gas flows is provided along at least one of the load receiving surfaces, it is possible to reduce the influence of heat generated in the axial disc and suppress the temperature rise.

In some embodiments, the housing may be formed with a flow passage port of the second flow passage independent of the first flow passage. The mutual influence between the first flow passage and the second flow passage can be reduced by cutting the connection between the first flow passage and the second flow passage.

In some embodiments, the housing may include, as the flow passage port of the cooling gas flow passage, a pair of flow passage ports provided on the compressor impeller side and the turbine impeller side across the stator unit, a flow passage port provided in a centrifugal direction of the axial disc, and a flow passage port provided on a side of the axial disc opposite to the stator unit. According to this aspect, when designing the first flow passage and the second flow passage, optimization can be facilitated.

In some embodiments, the rotary machine further includes a touchdown bearing disposed on a side closer to the turbine impeller than the axial magnetic bearing, an inlet of the cooling gas flow passage provided in the housing, a inlet tube connected to the inlet of the cooling gas flow passage, and a control valve provided in the inlet tube. The inlet of the cooling gas flow passage may be provided between the touchdown bearing and the turbine impeller. By adjusting the flow rate of the cooling gas introduced from the inlet tube with the control valve, a pressure (a flow rate) can be adjusted so that the working fluid does not enter from the turbine impeller side.

In some embodiments, the rotary machine further includes a touchdown bearing disposed on the side closer to the turbine impeller than the axial magnetic bearing, wherein the touchdown bearing includes an inner race on the rotary shaft side, and an outer race facing the inner race via rolling elements, and the housing includes a baffle plate which closes a gap between the inner race and the outer race of the touchdown bearing. Even if the working fluid enters, entry of the working fluid to the touchdown bearing side is prevented by the baffle plate. As a result, it is advantageous in preventing a low-temperature working fluid from directly reaching the motor.

Hereinafter, an embodiment of the present disclosure will be described with reference to the drawings. In the description of the drawings, the same elements are denoted by the same reference numerals, and repeated description will not be provided.

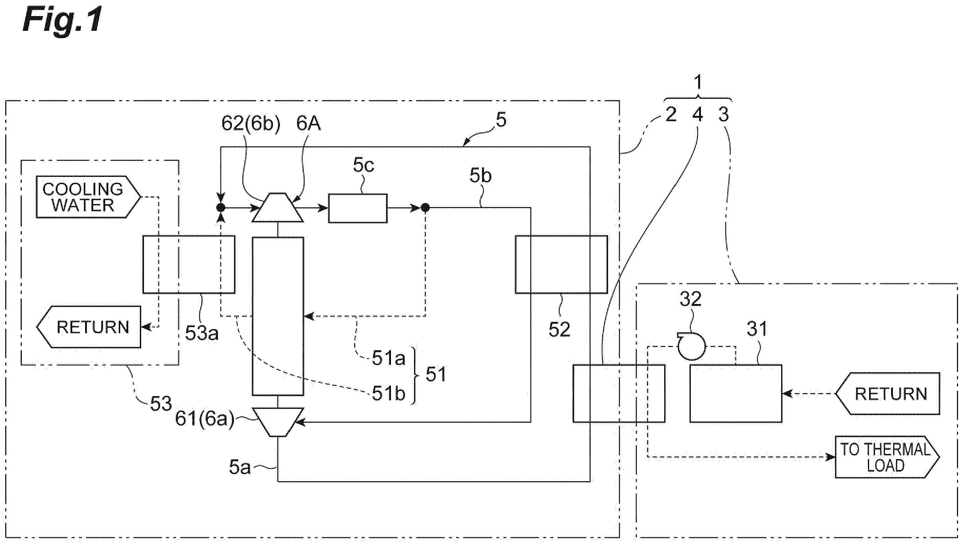

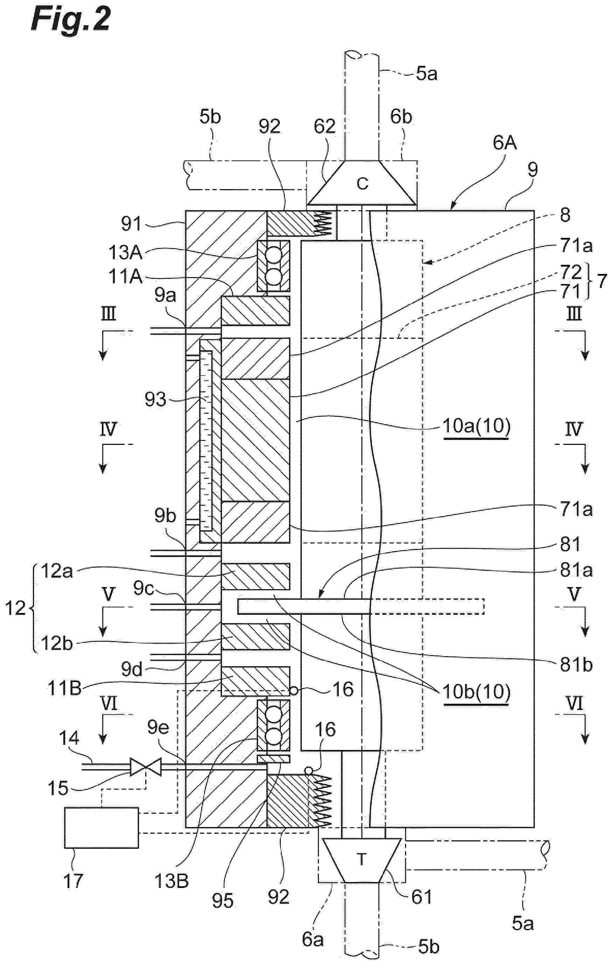

In the following disclosure, a cooling system 1 provided with a rotary machine 6A according to an embodiment will be described with reference to FIGS. 1 and 2. The cooling system 1 is a system which cools liquid nitrogen, by using neon gas or a gas partially containing neon as a working fluid. The cooling system 1 includes a refrigeration device 2 through which the working fluid circulates while cooling, a refrigerant circulation device 3 through which liquid nitrogen circulates, and a cooling heat exchange unit 4 which performs a heat exchange between the refrigeration device 2 and the refrigerant circulation device 3 to cool the liquid nitrogen.

The refrigerant circulation device 3 includes a storage tank 31 of liquid nitrogen, and a pump unit 32 that pumps liquid nitrogen cooled down to a desired temperature in the cooling heat exchange unit 4. The liquid nitrogen is sent to a heat load side by driving the pump unit 32, and after cooling the various devices and components to be cooled, the liquid nitrogen returns to the storage tank 31.

The refrigeration device 2 includes a rotary machine 6A according to the first embodiment and a circulation line 5. The circulation line 5 is a line through which a working fluid (hereinafter referred to as "circulating gas") circulates, and the rotary machine 6A is a device that cools the circulating gas to, for example, an extremely low temperature. The rotary machine 6A (see FIG. 2) includes an expansion section 6a provided with a turbine impeller 61, and a compression section 6b provided with a compressor impeller 62. The rotary machine 6A adopts a direct drive type drive system. In the rotary machine 6A, by the driving of the motor 7, the rotary shaft 8 rotates directly and the turbine impeller 61 and the compressor impeller 62 rotate. Further, the expansion section 6a of the rotary machine 6A and the circulation line 5 are stored in a heat insulating container (not illustrated) such as a cold box.

The circulation line 5 is provided with a low-pressure side line 5a which connects the expansion section 6a and the compression section 6b, and a high-pressure side line 5b which connects the compression section 6b and the expansion section 6a. The low-pressure side line 5a is a flow passage through which the circulating gas cooled by the expansion in the expansion section 6a flows toward the inlet of the compression section 6b. The low-pressure side line 5a is provided with a pipe, a valve, and the like. The low-pressure side line 5a is connected to the refrigerant circulation device 3 via the cooling heat exchange unit 4 in a heat exchangeable manner. The cooling heat exchange unit 4 is, for example, a heat exchanger which performs a heat exchange between the circulating gas of the low-pressure side line 5a and the liquid nitrogen of the refrigerant circulation device 3.

The high-pressure side line 5b is a flow passage through which the circulating gas discharged from the compression section 6b flows toward the inlet of the expansion section 6a. The high-pressure side line 5b is provided with a pipe, a valve, and the like. The high-pressure side line 5b is provided with a cooler unit 5c for cooling the circulating gas, and a cooling gas line 51 branching from a main line on a downstream side of the cooler unit 5c. The main line of the high-pressure side line 5b is connected to the low-pressure side line 5a via a regenerative heat exchange unit 52 in a heat exchangeable manner. The regenerative heat exchange unit 52 is, for example, a heat exchanger that performs a heat exchange between the circulating gas of the high-pressure side line 5b and the circulating gas of the low-pressure side line 5a.

The refrigeration device 2 is provided with a cooling gas line 51 which introduces the cooling gas Ga for suppressing the temperature rise of the motor 7 of the rotary machine 6A into the rotary machine 6A. The cooling gas line 51 can also be a flow passage independent of the circulation line 5, but in the present embodiment, a part of the circulating gas flowing through the circulation line 5 is used as the cooling gas Ga.

Specifically, the cooling gas line 51 is provided with an introduction line 51a on an upstream side of the rotary machine 6A, and an exhaust heat line 51b on a downstream side of the rotary machine 6A. The introduction line 51a branches off from the high-pressure side line 5b on the downstream side of the cooler unit 5c, and is connected to the rotary machine 6A. The exhaust heat line 51b is connected to the heat exchange unit 53a of the water cooling device 53 in a heat exchangeable manner, and is further connected to the low-pressure side line 5a on the upstream side of the compression section 6b. The heat exchange unit 53a is, for example, a heat exchanger that performs a heat exchange between the cooling gas Ga of the exhaust heat line 51b and the cooling water of the water cooling device 53.

The temperature of the cooling gas Ga rises by releasing heat from the rotary machine 6A. The cooling gas Ga having the raised temperature is cooled to the same temperature as another circulating gas introduced into the compression section 6b by the water cooling device 53, and is returned to the low-pressure side line 5a. The circulating gas returned to the low-pressure side line 5a passes through the compression section 6b and the cooler unit 5c again, thereby substantially forming a self-circulation line. The circulating gas passing through the cooling gas line 51 has a special function of suppressing the temperature rise of the motor 7 of the rotary machine 6A.

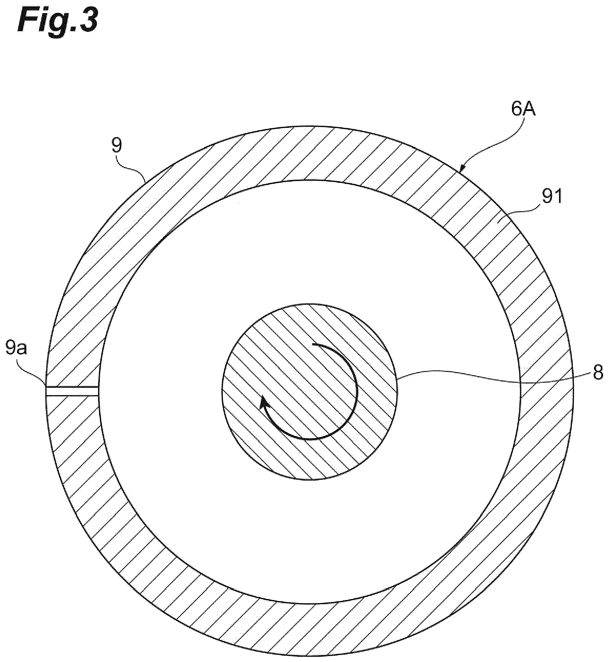

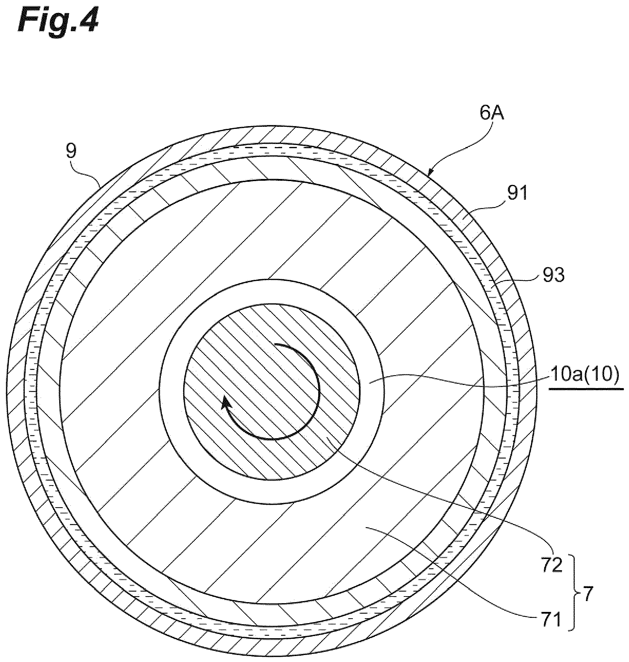

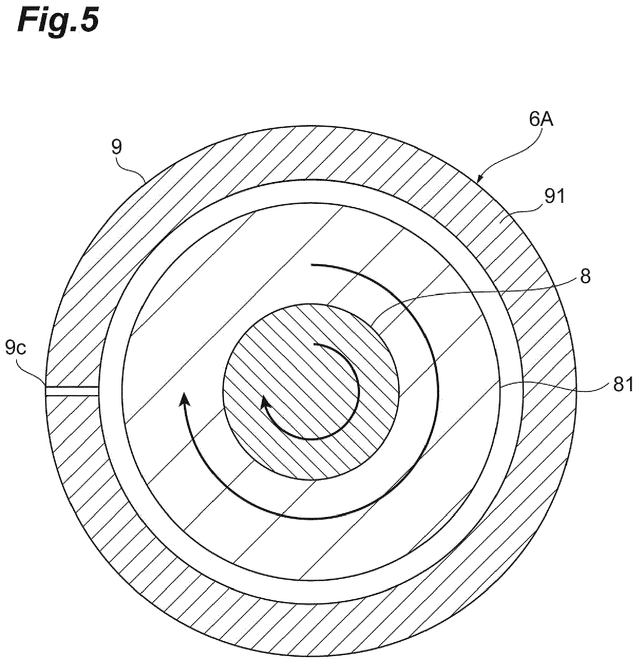

As illustrated in FIGS. 2, 3, 4, 5, and 6, the rotary machine 6A is provided with a rotary shaft 8 having an axial disc 81, a motor 7 for rotating the rotary shaft 8, a bearing unit for rotatably supporting the rotary shaft 8, and a turbine impeller 61 and a compressor impeller 62 mounted on the rotary shaft 8. The turbine impeller 61 is mounted on one end portion side of the rotary shaft 8, and the compressor impeller 62 is mounted on the other end portion side of the rotary shaft 8. One end portion side means one end portion of the rotary shaft 8 and the vicinity of the end portion. Further, the other end portion side means the end portion on a side opposite to the one end portion of the rotary shaft 8 and the vicinity of this end portion. The turbine impeller 61 is disposed in the expansion section 6a, and the compressor impeller 62 is disposed in the compression section 6b. Further, the rotary machine 6A is provided with a housing 9 that accommodates the motor 7 and the like.

The motor 7 includes a rotor unit 72 fixed to the rotary shaft 8, and a stator unit 71 fixed to the housing 9. The rotor unit 72 is provided with a permanent magnet or the like for creating a magnetic flux serving as a foundation. The stator unit 71 is provided with a core section, a coil section wound around the core section, and the like, and is disposed to face the rotor unit 72. Coil ends 71a are formed at both ends of the stator unit 71, that is, at both ends along the axial direction of the rotary shaft 8.

The bearing unit includes a pair of radial magnetic bearing core sections 11A and 11B, an axial magnetic bearing 12, and a pair of touchdown bearings 13A and 13B. The pair of radial magnetic bearing core sections 11A and 11B is installed so that the stator unit 71 is disposed between the pair of radial magnetic bearing core sections 11A and 11B. The axial magnetic bearing 12 is disposed between the radial magnetic bearing core section 11B on the turbine impeller 61 side and the stator unit 71. The axial magnetic bearing 12 is provided with a pair of axial magnetic pole cores 12a and 12b that magnetically levitate the axial disc 81 and support the axial disc 81 in a non-contact manner, while sandwiching the axial disc 81 therebetween. One touchdown bearing 13A among the pair of touchdown bearings 13A and 13B is installed in the vicinity of the end portion of the rotary shaft 8 on the side of the compressor impeller 62. The other touchdown bearing 13B is installed in the vicinity of the end portion of the rotary shaft 8 on the side of the turbine impeller 61. The term "touchdown bearing" is sometimes called an auxiliary bearing.

The housing 9 is provided with a main body portion 91 that accommodates a part of the rotary shaft 8 including the motor 7, the axial magnetic pole cores 12a and 12b and the axial disc 81, a labyrinth seal section 92 that prevents leakage of circulating gas, and a cooling water flow passage 93 which mainly cools the stator unit 71. The labyrinth seal sections 92 are provided on the turbine impeller 61 side and the compressor impeller 62 side, respectively, and regulate the passage of the circulating gas through the gap generated between the main body portion 91 and the rotary shaft 8. Further, the cooling water flow passage 93 is a flow passage through which the cooling water passes, and is connected to the stator unit 71 via a heat exchange member such as copper in a heat exchangeable manner.

Further, in the housing 9, a cooling gas flow passage 10 is formed through which the cooling gas Ga for exhausting heat generated by the motor loss or windage loss passes. The windage loss occurs in the gap between the stator unit 71 and the rotor unit 72 of the motor 7. Further, in the rotary machine 6A according to the present embodiment, the axial disc 81 of the rotary shaft 8 is supported by the axial magnetic bearing 12, and a gap also exists between the axial disc 81 and the axial magnetic bearing 12. Specifically, the axial disc 81 is provided with a pair of load receiving surfaces 81a and 81b sandwiched by the axial magnetic bearings 12, and the axial magnetic pole cores 12a and 12b of the axial magnetic bearing 12 are disposed to face the respective load receiving surfaces 81a and 81b. Since the axial magnetic bearing 12 magnetically levitates and supports the axial disc 81, a gap that may cause a windage loss is formed between the axial magnetic pole cores 12a and 12b and the load receiving surfaces 81a and 81b.

In particular, it is necessary to form the cooling gas flow passage 10 in a gap in which the windage loss occurs. Hereinafter, the flow passage formed between the stator unit 71 and the rotor unit 72 is described as the first flow passage 10a, and the flow passage formed along the load receiving surfaces 81a and 81b of the axial disc 81 is described as the second flow passage 10b. Further, the second flow passage can be classified into a path formed along the load receiving surface 81a on the side of the stator unit 71 and a path formed along the load receiving surface 81b on the side opposite to the stator unit 71 side. Hereinafter, the load receiving surface 81a on one side of the stator unit 71 side serving as one path is described as the first load receiving surface 81a, and the load receiving surface 81b on the side opposite to the stator unit 71 side serving as the other path will be described as the second load receiving surface 81b.

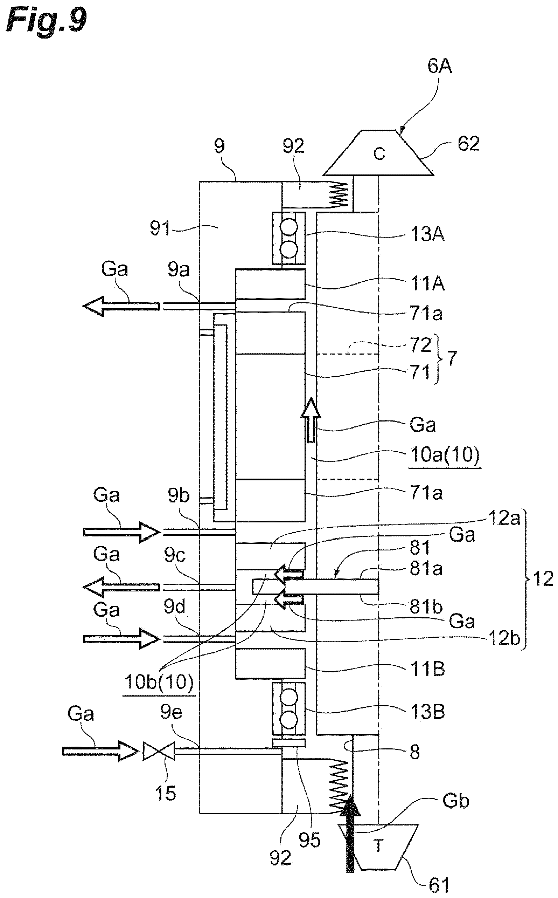

As illustrated in FIGS. 2 and 9, the housing 9 is formed with a plurality of flow passage ports that can function, for example, as inlets or outlets of the cooling gas Ga. A first flow passage port 9a is formed between the radial magnetic bearing core section 11A on the compressor impeller 62 side and the stator unit 71. A second flow passage port 9b is formed between the stator unit 71 and the axial magnetic bearing 12. A third flow passage port 9c is formed between the pair of axial magnetic pole cores 12a and 12b of the axial magnetic bearing 12. The third flow passage port 9c is a flow passage port formed in the centrifugal direction of the axial disc 81. A fourth flow passage port 9d is formed between the axial magnetic bearing 12 and the radial magnetic bearing core section 11B on the turbine impeller 61 side. A fifth flow passage port 9e is formed between the touchdown bearing 13B on the turbine impeller 61 side and the turbine impeller 61. A inlet tube through which the cooling gas Ga passes is connected to each of the first flow passage port 9a to the fifth flow passage port 9e, and in particular, a control valve 15 capable of adjusting the flow rate is installed to a inlet tube 14 connected to the fifth flow passage port 9e.

In the present embodiment, the first flow passage port 9a and the third flow passage port 9c are outlets of the cooling gas Ga, and the second flow passage port 9b, the fourth flow passage port 9d, and the fifth flow passage port 9e are inlets of the cooling gas Ga. A part of the cooling gas Ga introduced from the second flow passage port 9b passes through the part between the stator unit 71 and the rotor unit 72, flows along the coil end 71a of the stator unit 71, and is discharged from the first flow passage port 9a. The flow passage forming the flow is the first flow passage 10a of the cooling gas flow passage 10. Further, the remainder of the cooling gas Ga introduced from the second flow passage port 9b flows along the first load receiving surface 81a of the axial disc 81 and is discharged from the third flow passage port 9c. The flow passage forming the flow is the second flow passage 10b of the cooling gas flow passage 10.

The cooling gas Ga introduced from the fourth flow passage port 9d flows along the second load receiving surface 81b of the axial disc 81, and is discharged from the third flow passage port 9c. The flow passage forming the flow is the second flow passage 10b of the cooling gas flow passage 10.

The cooling gas Ga introduced from the fifth flow passage port 9e prevents the leak gas Gb from entering from the turbine impeller 61 (an expansion section 6a) side. The flow rate of the cooling gas Ga introduced from the fifth flow passage port 9e is adjusted by the control valve 15. A detailed description of this flow rate adjustment is as follows.

The rotary machine 6A includes a temperature sensor 16 and a control device 17. The temperature sensor 16 is disposed in the vicinity of the radial magnetic bearing core section 11B on the turbine impeller 61 side or in the vicinity of the labyrinth seal section 92 on the turbine impeller 61 side. The control device 17 monitors the temperature of the temperature sensor 16 and controls opening and closing of the control valve 15 on the basis of the temperature detected by the temperature sensor 16. The control device 17 is mainly made up of a computer including, for example, a CPU, a ROM and a RAM and achieves various functions by executing a predetermined program. The control device 17 is connected to the temperature sensor 16 by cable or radio so that the data detected by the temperature sensor 16 can be acquired. The control device 17 is connected to the control valve 15 by cable or radio so that a control signal for controlling the control valve 15 can be transmitted and received.

The control device 17 stores, for example, a predetermined temperature Ta set as a monitoring reference value. The predetermined temperature Ta can be arbitrarily set and changed and is a threshold for detecting the leakage of the circulating gas from the turbine impeller 61 side. The circulating gas cooled by the expansion section 6a has a temperature lower than the cooling gas Ga flowing through the cooling gas flow passage 10. When a temperature Tx detected by the temperature sensor 16 is higher than the temperature Ta, the control device 17 determines that there is no leakage of the circulating gas and closes the control valve 15. On the other hand, when the temperature Tx detected by the temperature sensor 16 becomes equal to or lower than Ta, the control device 17 determines that the circulating gas substantially enters as a leak gas Gb (see FIG. 9) to control operating and closing of the control valve 15, and introduces the cooling gas Ga into the cooling gas flow passage 10. When the interior is pressurized by the introduction of the cooling gas Ga, the pressure in the expansion section 6a is thus balanced and the entry of the leak gas Gb is suppressed. When the temperature Tx detected by the temperature sensor 16 becomes higher than the temperature Ta by the introduction of the cooling gas Ga from the fifth flow passage port 9e, the control device 17 closes the control valve 15. When the cooling gas Ga is excessively introduced from the fifth flow passage port 9e, the pressure inside the cooling gas flow passage 10 becomes excessively higher than the expansion section 6a, and this time, there is a possibility of leak of the cooling gas Ga toward the expansion section 6a side. Therefore, an appropriate predetermined temperature Ta is set, and it is preferable that the control device 17 automatically controls opening and closing of the control valve 15 with the temperature Ta as a threshold value.

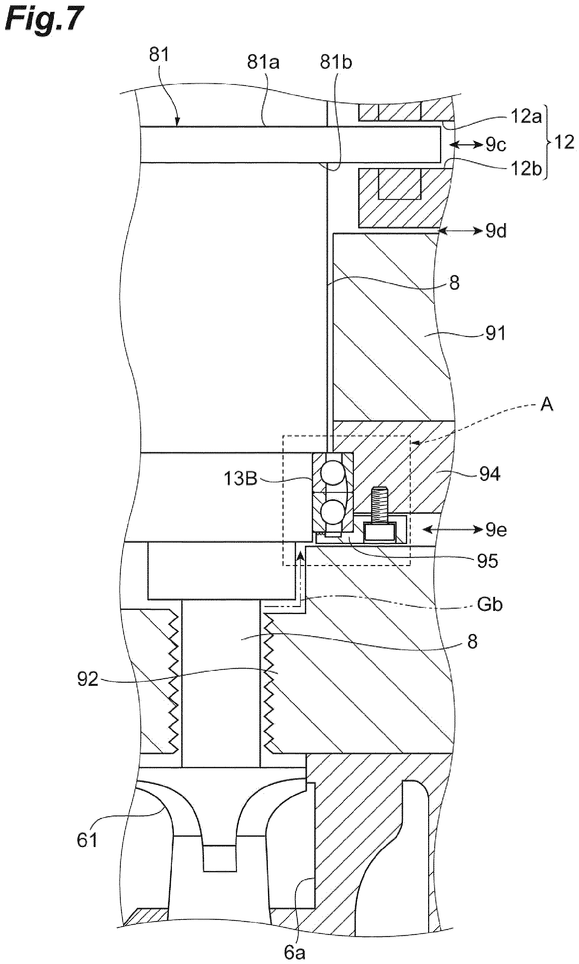

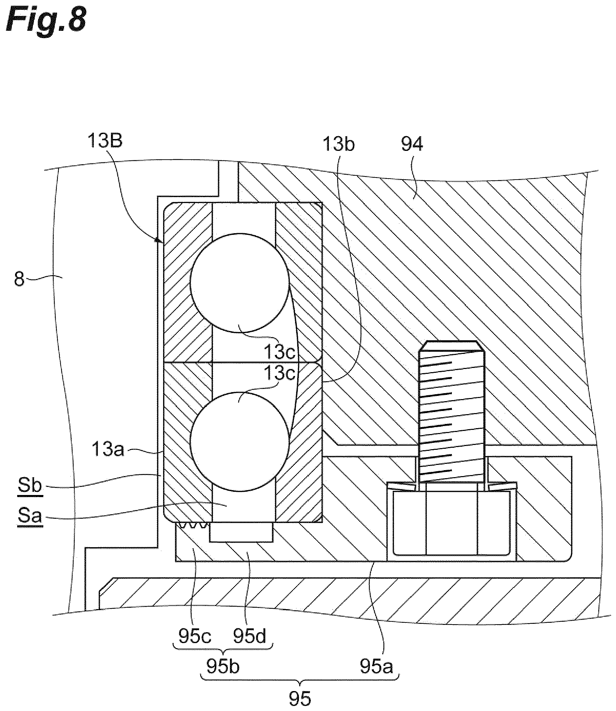

As illustrated in FIGS. 7 and 8, the housing 9 is provided with a support plate 95 that supports the touchdown bearing 13B on the turbine impeller 61 side. The touchdown bearing 13B includes an inner race 13a on the side of the rotary shaft 8 and an outer race 13b facing the inner race 13a via the rolling element 13c. The main body portion 91 of the housing 9 is formed with a receiving portion 94 on which the outer race 13b of the touchdown bearing 13B is mounted. The support plate 95 is bolted to the receiving portion 94, and comes into contact with the outer race 13b to sandwich the touchdown bearing 13B between the receiving portion 94 and the support plate 95.

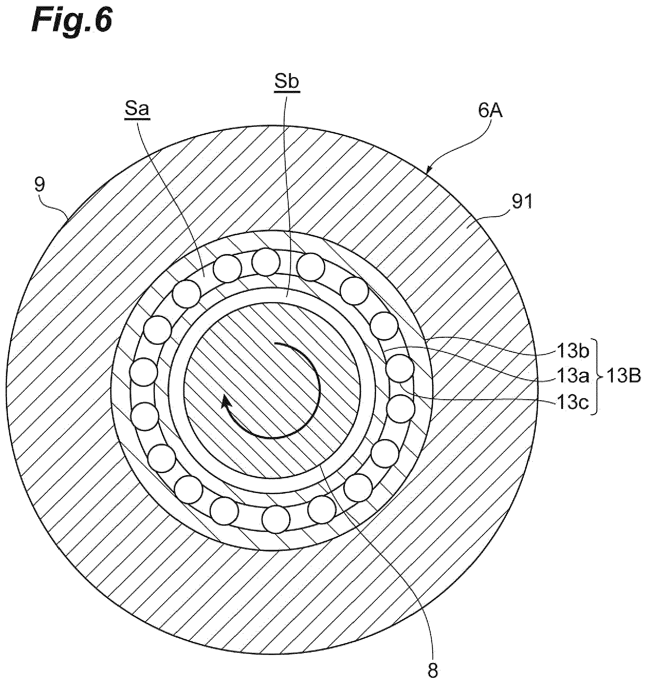

The support plate 95 includes a base section 95a in contact with the outer race 13b, and a baffle plate section 95b protruding from the base section 95a toward the rotary shaft 8 side. The baffle plate section 95b covers a gap Sa between the outer race 13b and the inner race 13a and is further disposed along the inner race 13a. Although a plurality of rolling elements 13c is present, the gap Sa (see FIGS. 6 and 8) between the inner race 13a and the outer race 13b is greater than the gap Sb between the inner race 13a and the rotary shaft 8. By blocking the gap Sa, the baffle plate section 95b prevents the leak gas Gb from entering through the interior of the touchdown bearing 13B.

Further, the baffle plate section 95b includes a wear section 95c having a toothed shape on the side facing the inner race 13a, and a constricted section 95d provided between the wear section 95c and the base section 95a. The constricted section 95d is thinner than the other sections. Further, the support plate 95 including the baffle plate section 95b is manufactured, using an SUS material that is softer than the inner race 13a. As the SUS material, austenitic stainless steel, for example, SUS 304 or the like can be used. The baffle plate section 95b can effectively close the gap Sa, even if the inner race 13a moves due to the internal flow such as the rotation of the rotary shaft 8 or the flow of the cooling gas Ga.

The refrigeration device 2 according to the first embodiment includes the aforementioned rotary machine 6A, and the rotary machine 6A includes a first flow passage 10a through which the cooling gas Ga passes through the part between the rotor unit 72 and the stator unit 71. That is, even if heat is generated by the motor loss occurring in the stator unit 71 and the windage loss occurring between the rotor unit 72 and the stator unit 71, it is possible to suppress the temperature rise by the cooling gas Ga passing through the first flow passage 10a.

Further, a windage loss occurs due to the rotation of the axial disc 81 in the gap between the load receiving surfaces 81a and 81b of the axial disc 81 and the axial magnetic bearing 12, and heat is generated. However, since the rotary machine 6A of the refrigeration device 2 includes the second flow passage 10b through which the cooling gas Ga flows along the load receiving surfaces 81a and 81b, it is possible to reduce the influence of heat generated in the axial disc 81 and to suppress the temperature rise. In the rotary machine 6A, although two second flow passages 10b through which the cooling gas Ga flows are formed along both the load receiving surfaces 81a and 81b, if the second flow passage 10b is formed in one of them, the temperature rise due to the windage loss of the axial disc 81 can be effectively suppressed.

Further, in the housing 9 of the rotary machine 6A, a flow passage port of the second flow passage 10b independent of the first flow passage 10a is formed. Specifically, a part of the cooling gas Ga introduced from the second flow passage port 9b passes through the part between the stator unit 71 and the rotor unit 72, further flows along the coil end 71 a of the stator unit 71, and is discharged from the first flow passage port 9a. The flow passage forming the flow is the first flow passage 10a. On the other hand, the cooling gas Ga introduced from the fourth flow passage port 9d flows along the second load receiving surface 81b of the axial disc 81 and is discharged from the third flow passage port 9c. The flow passage forming the flow is the second flow passage 10b. The fourth flow passage port 9d and the third flow passage port 9c serving as an inlet and an outlet of the second flow passage 10b are independent of the second flow passage port 9b and the first flow passage port 9a serving as an inlet and an outlet of the first flow passage 10a. Making the flow passage port of the second flow passage 10b independent from the first flow passage 10a enables reduction of influences such as stagnation of the cooling gas due to collapse of the pressure balance in the cooling gas flow passage 10 by cutting the connection between the first flow passage 10a and the second flow passage 10b.

Further, when comparing the pressures of the housing 9 side (a compressor back side) of the compressor impeller 62 and the housing 9 side (a turbine back side) of the turbine impeller 61, the pressure of the turbine back side is higher than the pressure of the compressor back side. In other words, the rotary machine 6A is in a circumstance in which the leak gas Gb is likely to enter the inside of the housing 9 from the turbine back side. However, in the rotary machine 6A according to the present embodiment, by forming the cooling gas flow passage 10 in the housing 9, the cooling gas Ga is stagnated, as a result, the entry and passage of the leak gas Gb is suppressed.

Further, there is also a way of thinking that the leak gas Gb from the turbine back side is used as cooling gas. However, if it is attempted to use the leak gas Gb, there is a possibility that a decrease in efficiency of the turbine is caused and the specification of the device cannot be satisfied. Further, when the leak gas Gb is used as a cooling gas, reduction in the flow rate of the leak gas Gb makes it difficult to appropriately cool the motor 7. Therefore, in the present embodiment, the circulating gas is introduced from a path different from the leak gas Gb, and the introduced circulating gas is used as the cooling gas Ga to form the cooling gas flow passage 10.

Furthermore, in the present embodiment, the second flow passage 10b is formed along the load receiving surfaces 81a and 81b of the axial disc 81. Therefore, even if the leak gas Gb enters along the rotary shaft 8, it is possible to prevent the low-temperature leak gas Gb from directly reaching the motor 7 by the cooling gas Ga passing through the second flow passage 10b.

Further, the housing 9 of the rotary machine 6A is provided with a first flow passage port 9a and a second flow passage port 9b provided on the compressor impeller 62 side and the turbine impeller 61 side across the stator unit 71, as the flow passage ports of the cooling gas flow passage 10. Further, the housing 9 is provided with a third flow passage port 9c provided in the centrifugal direction of the axial disc 81, and a fourth flow passage port 9d provided on the side opposite to the stator unit 71 of the axial disc 81. According to the present embodiment, various patterns can be achieved as illustrated in examples to be described later, and it becomes easier to optimize when designing the first flow passage 10a and the second flow passage 10b.

Further, the rotary machine 6A includes a touchdown bearing 13B disposed on the side closer to the turbine impeller 61 than the axial magnetic bearing 12. The fifth flow passage port 9e is provided between the touchdown bearing 13B and the turbine impeller 61, and functions as an inlet of the cooling gas Ga. Further, the inlet tube 14 is connected to the fifth flow passage port 9e, and the control valve 15 is provided in the inlet tube 14. It is possible to adjust the flow rate of the cooling gas Ga introduced into or discharged from the inlet tube 14 by the control valve 15. As a result, the pressure (flow rate) can be adjusted so that the leak gas Gb does not enter from the turbine impeller 61 side (turbine back side).

Further, the housing 9 of the rotary machine 6A is provided with a baffle plate section 95b that covers a gap between the inner race 13a and the outer race 13b of the touchdown bearing 13B. For example, even if the low-temperature circulating gas exceeds the labyrinth seal section 92 and enters the housing 9 as the leak gas Gb, the baffle plate section 95b prevents the leak gas Gb from entering the touchdown bearing 13B side. As a result, this is advantageous in preventing the low-temperature leak gas Gb from directly reaching the motor 7.

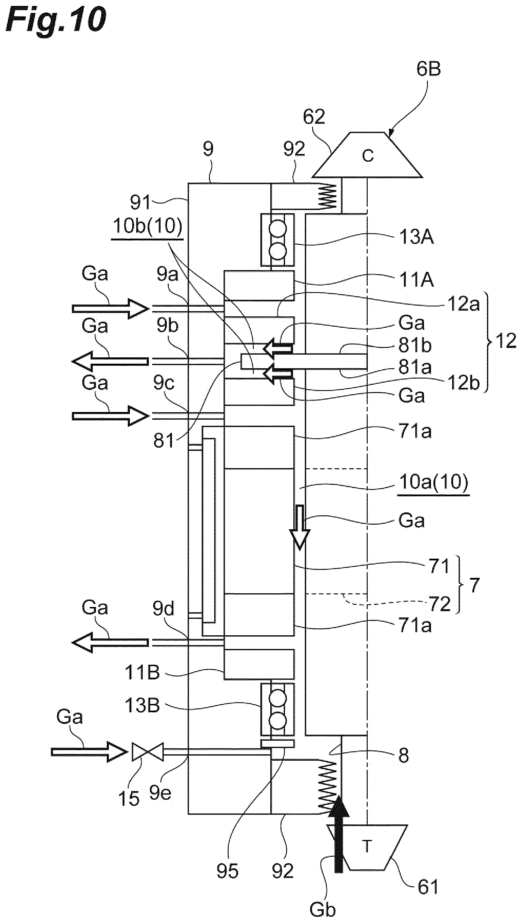

In the following disclosure, a refrigeration device 2 according to a second embodiment will be described with reference to FIG. 10. Note that the refrigeration device 2 according to the second embodiment is basically common to the refrigeration device 2 according to the first embodiment except for a rotary machine 6B. Further, the rotary machine 6B according to the second embodiment has the same elements and structure as the rotary machine 6A according to the first embodiment. Hereinafter, the rotary machine 6B will mainly be described, and the same elements and structures as those of the rotary machine 6A according to the first embodiment are denoted by the same reference numerals, and the detailed description thereof will not be provided.

An axial disc 81 of the rotary machine 6B is provided on the side closer to the compressor impeller 62 than the stator unit 71. Therefore, the axial magnetic bearing 12 is provided on the side closer to the compressor impeller 62 than the stator unit 71.

In the housing 9, for example, a plurality of flow passage ports capable of functioning as inlets or outlets of the cooling gas Ga is formed. A first flow passage port 9a is formed between a radial magnetic bearing core section 11A on the compressor impeller 62 side and the axial magnetic bearing 12. A second flow passage port 9b is formed between the pair of axial magnetic pole cores 12a and 12b of the axial magnetic bearing 12. The second flow passage port 9b is a flow passage port formed in the centrifugal direction of the axial disc 81. A third flow passage port 9c is formed between the axial magnetic bearing 12 and the stator unit 71. A fourth flow passage port 9d is formed between the stator unit 71 and the radial magnetic bearing core section 11B on the turbine impeller 61 side. Similarly to the first embodiment, a fifth flow passage port 9e is provided between the touchdown bearing 13B on the turbine impeller 61 side and the turbine impeller 61. A inlet tube through which the cooling gas Ga passes is connected to each of the first to fifth flow passage ports 9a to 9e. In particular, a control valve 15 capable of adjusting the flow rate is installed in a inlet tube 14 connected to the fifth flow passage port 9e.

In the present embodiment, the first flow passage port 9a, the third flow passage port 9c, and the fifth flow passage port 9e are inlets of the cooling gas Ga, and the second flow passage port 9b and the fourth flow passage port 9d are outlets of the cooling gas Ga. Some of the cooling gas Ga introduced from the first flow passage port 9a and the cooling gas Ga introduced from the third flow passage port 9c forms the second flow passage 10b, respectively. Specifically, the cooling gas Ga introduced from the first flow passage port 9a flows along the second load receiving surface 81b of the axial disc 81 to form the second flow passage 10b, and thereafter, the cooling gas is discharged from the second flow passage port 9b. Further, a part of the cooling gas Ga introduced from the third flow passage port 9c flows along the first load receiving surface 81a of the axial disc 81 to form the second flow passage 10b, and thereafter, the cooling gas is discharged from the second flow passage port 9b. Further, the other cooling gas Ga introduced from the third flow passage port 9c passes through the part between the stator unit 71 and the rotor unit 72, further flows along the coil end 71a of the stator unit 71, and is discharged from the fourth flow passage port 9d. This flow forms the first flow passage 10a of the cooling gas flow passage 10.

Like the rotary machine 6A according to the first embodiment, in the rotary machine 6B according to the second embodiment, even if heat is generated, due to motor loss occurring in the stator unit 71 and windage loss occurring between the rotor unit 72 and the stator unit 71, it is possible to suppress the temperature rise by the cooling gas Ga passing through the first flow passage 10a. Further, the rotary machine 6B can reduce the influence of heat generated in the axial disc 81 caused by windage loss, and can suppress the temperature rise. In addition, the rotary machine 6B according to the present embodiment exhibits the same action and effect as the rotary machine 6A described above.

### EXAMPLES

Hereinafter, the present invention will be described in more detail on the basis of examples. In the following disclosure, respective examples based on the first embodiment will be described with reference to FIGS. 2, 11, and 12. Further, respective examples based on the second embodiment will be described with reference to FIGS. 10, 13, and 14. Note that the following first example is an example common to the first embodiment described above, and the second example to the twenty-fourth example are different from the first example in that the position of the inlet or outlet, or a part of the flow passage port is closed, while being based on the above-described first embodiment.

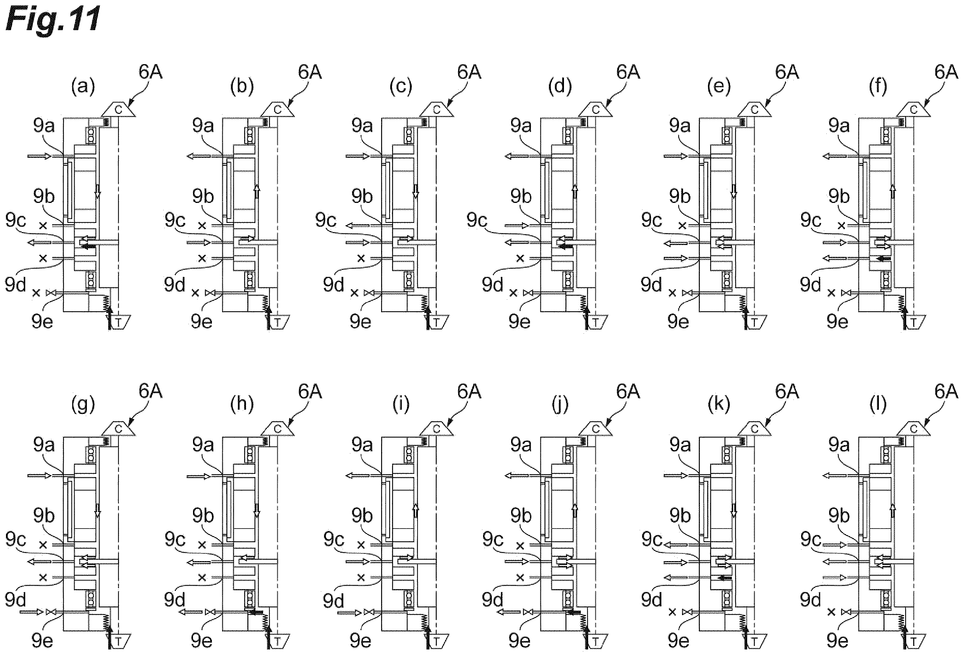

As described above, the rotary machine 6A according to the first example is substantially the same as the first embodiment (see FIG. 2). Further, FIG. 11(a) is a rotary machine 6A according to a second example, FIG. 11(b) is a rotary machine 6A according to a third example, FIG. 11(c) is a rotary machine 6A according to a fourth example, FIG. 11(d) is a rotary machine 6A according to a fifth example, FIG. 11(e) is a rotary machine 6A according to a sixth example, FIG. 11(f) is a rotary machine 6A according to a seventh example, FIG. 11(g) is a rotary machine 6A according to an eighth example, FIG. 11(h) is a rotary machine 6A according to a ninth example, FIG 11(i) is a rotary machine 6A according to a tenth example, FIG. 11(j) is a rotary machine 6A according to an eleventh example, FIG. 11(k) is a rotary machine 6A according to a twelfth example, and FIG. 11(l) is a rotary machine 6A according to a thirteenth example.

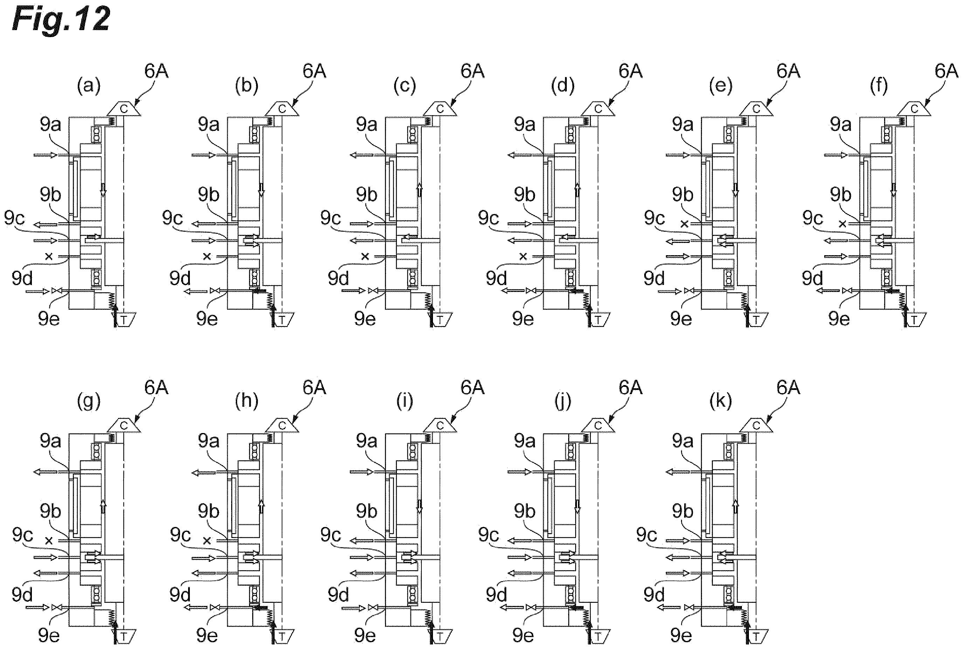

Further, FIG. 12(a) is a rotary machine 6A according to a fourteenth example, FIG. 12(b) is a rotary machine 6A according to a fifteenth example, FIG. 12(c) is a rotary machine 6A according to a sixteenth example, FIG 12(d) is a rotary machine 6A according to a seventeenth example, FIG. 12(e) is a rotary machine 6A according to an eighteenth example, FIG 12(f) is a rotary machine 6A according to a nineteenth example, FIG. 12(g) is a rotary machine 6A according to a twentieth example, FIG. 12(h) is a rotary machine 6A according to a twenty-first example, FIG. 12(i) is a rotary machine 6A according to a twenty-second example, FIG. 12(j) is a rotary machine 6A according to a twenty-third example, and FIG. 12(k) is a rotary machine 6A according to a twenty-fourth example.

The first example (see FIG. 2), and the twenty-second to twenty-fourth examples (FIG 12(i), FIG. 12(j), and FIG. 12(k)) illustrate examples in which all the flow passage ports 9a to 9e are used as inlets or outlets, respectively.

The second example (see FIG. 11(a)), and the third example (see FIG. 11(b)) illustrate examples in which two of all the flow passage ports 9a to 9e are used as inlets or outlets, respectively.

The fourth to eleventh examples (see FIGS. 11(c) to 11(j)) illustrate examples in which three of all the flow passage ports 9a to 9e are used as inlets or outlets, respectively.

The twelfth to twenty-first examples (FIG. 11(k), FIG. 11(l), and FIGS. 12(a) to 12(h)) illustrate examples in which four of all the flow passage ports 9a to 9e are used as inlets or outlets, respectively.

In the first to twenty-fourth examples described above, the results of comprehensive evaluation from the viewpoint of suppression of temperature rise of the motor and prevention of entry of leak gas from the expansion section are as follows. That is, a high effect was checked in the first example, the fourteenth example, the sixteenth example, and the twenty-second example. Further, a similar high effect was checked in the fourth example, the sixth example, the eighth example, the tenth example, the thirteenth example, the eighteenth example, and the twentieth example.

Further, in the following disclosure, respective examples based on the second embodiment will be described with reference to FIGS. 10, 13, and 14. Further, the following twenty-fifth example is an example common to the second embodiment illustrated in FIG. 10, and the twenty-sixth example to the forty-eighth example are different from the twenty-fifth example in that the position of the inlet or outlet, or a part of the flow passage port is closed, while being based on the second embodiment.

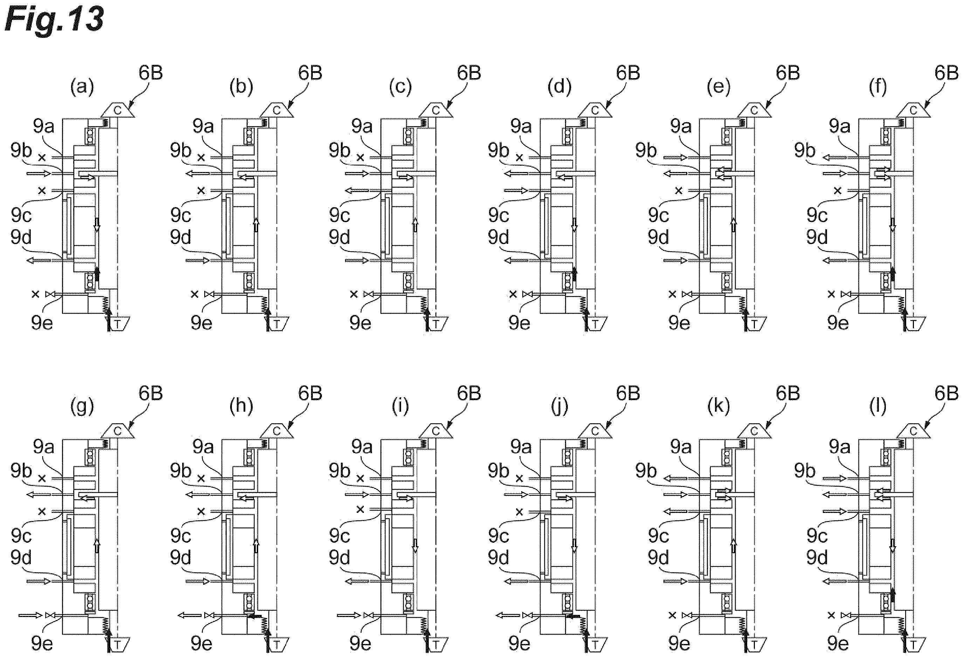

As described above, the rotary machine 6B according to the twenty-fifth example is substantially the same as the second embodiment (see FIG. 10). Further, FIG. 13(a) is a rotary machine 6B according to a twenty-sixth example, FIG. 13(b) is a rotary machine 6B according to a twenty-seventh example, FIG. 13(c) is a rotary machine 6B according to a twenty-eight example, FIG. 13(d) is a rotary machine 6B according to a twenty-ninth example, FIG. 13(e) is a rotary machine 6B according to a thirtieth example, FIG. 13(f) is a rotary machine 6B according to a thirty-first example, FIG. 13(g) is a rotary machine 6B according to a thirty-second example, FIG. 13(h) is a rotary machine 6B according to a thirty-third example, FIG. 13(i) is a rotary machine 6B according to a thirty-fourth example, FIG 13(j) is a rotary machine 6B according to a thirty-fifth example, FIG. 13(k) is a rotary machine 6B according to a thirty-sixth example, and FIG. 13(l) is a rotary machine according to a thirty-seventh example.

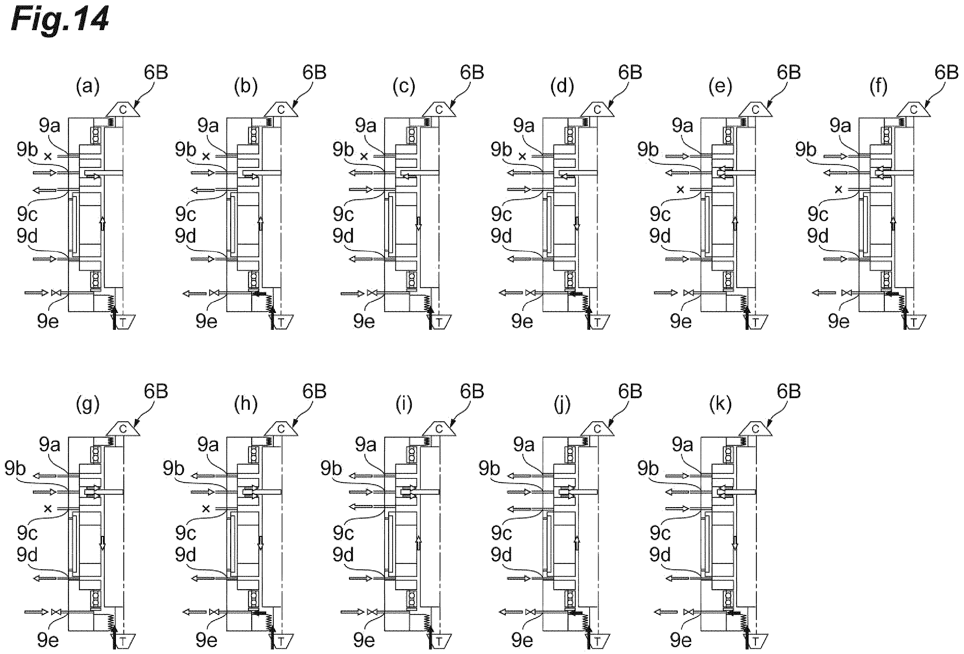

Further, FIG. 14(a) is a rotary machine 6B according to a thirty-eighth example, FIG. 14(b) is a rotary machine 6B according to a thirty-ninth example, FIG. 14(c) is a rotary machine 6B according to a fortieth example, FIG. 14(d) is a rotary machine 6B according to a forty-first example, FIG. 14(e) of is a rotary machine 6B according to a forty-second example, FIG. 14(f) is a rotary machine 6B according to a forty-third example, FIG. 14(g) is a rotary machine 6B according to a forty-fourth example, FIG. 14(h) is a rotary machine 6B according to a forty-fifth example, FIG. 14(i) of is a rotary machine 6B according to a forty-sixth example, FIG. 14(j) is a rotary machine 6B according to a forty-seventh example, and FIG. 14(k) is a rotary machine 6B according to a forty-eighth example.

The twenty-fifth example (see FIG. 10), the forty-sixth to forty-eighth examples (see FIG. 14(i), FIG. 14(j) and FIG. 14(k)) illustrate examples in which all the flow passage ports 9a to 9e are used as the inlets or the outlets, respectively.

The twenty-sixth example (see FIG. 13(a)), the twenty-seventh example (see FIG. 13(b)) illustrate examples in which two of all the flow passage ports 9a to 9e are used as the inlets or the outlets, respectively.

The twenty-eighth to thirty-fifth examples (see FIGS. 13(c) to 13(j)) are examples in which three of all the flow passage ports 9a to 9e are used as the inlets or the outlets, respectively.

The thirty-sixth to forty-fifth examples (FIG. 13(k), FIG. 13(l), and FIG. 14(a) to 14(h)) are examples in which four of all the flow passage ports 9a to 9e are used as the inlets or the outlets, respectively.

In each of the above-described twenty-fifth to forty-eighth examples, the results of comprehensive evaluation from the viewpoint of suppression of temperature rise of the motor and prevention of entry of leak gas from the expansion section are as follows. That is, high effect was checked in the twenty-fifth example, the thirty-eighth example, the fortieth example, and the forty-sixth example. Further, high effect similar to the above was checked in the twenty-eighth example, the thirtieth example, the thirty-second example, the thirty-fourth example, the thirty-sixth example, and the forty-second example.

### Reference Signs List

6A, 6B: rotary machine, 7: motor, 8: rotary shaft, 9: housing, 9a: first flow passage port, 9b: second flow passage port, 9c: third flow passage port, 9d: fourth flow passage port, 9e: fifth flow passage port, 10: cooling gas flow passage, 10a: first flow passage, 10b: second flow passage, 12: axial magnetic bearing, 13B: touchdown bearing, 13a: inner race, 13b: outer race, 13c: rolling element, 14: inlet tube, 15: control valve, 61: turbine impeller, 62: compressor impeller, 71: stator unit, 72: rotor unit, 81: axial disc, 81a: first load receiving surface, 81b: second load receiving surface, 95b: baffle plate, Ga: cooling gas.

## Claims

1. A rotary machine used in a refrigeration device which uses a gas containing at least neon as a working fluid, the rotary machine comprising:
a rotary shaft equipped with an axial disc;
an axial magnetic bearing which supports the rotary shaft;
a motor which rotates the rotary shaft;
a turbine impeller mounted on one end portion side of the rotary shaft;
a compressor impeller mounted on the other end portion side of the rotary shaft;
a cooling gas flow passage through which a cooling gas for cooling the motor flows; and
a housing which accommodates at least the motor, the axial magnetic bearing, and the axial disc,
wherein the motor is equipped with a rotor unit provided on the rotary shaft, and a stator unit facing the rotor unit,
the axial disc is equipped with a pair of load receiving surfaces sandwiched between the axial magnetic bearings, and
the cooling gas flow passage is equipped with a first flow passage between the rotor unit and the stator unit, and a second flow passage extending along at least one of the load receiving surface.

2. The rotary machine according to claim 1, wherein the housing is formed with a flow passage port of the second flow passage independent of the first flow passage.

3. The rotary machine according to claim 1 or 2, wherein the housing includes, as a flow passage port of the cooling gas flow passage, a pair of flow passage ports provided on the compressor impeller side and the turbine impeller side across the stator unit, a flow passage port provided in a centrifugal direction of the axial disc, and a flow passage port provided on a side of the axial disc opposite to the stator unit.

4. The rotary machine according to any one of claims 1 to 3, further comprising:
a touchdown bearing disposed on a side closer to the turbine impeller side than the axial magnetic bearing, an inlet of the cooling gas flow passage provided in the housing, a inlet tube connected to the inlet of the cooling gas flow passage, and a control valve provided in the inlet tube, and
the inlet of the cooling gas flow passage is provided between the touchdown bearing and the turbine impeller.

5. The rotary machine according to any one of claims 1 to 4, further comprising:
a touchdown bearing disposed on a side closer to the turbine impeller than the axial magnetic bearing,
wherein the touchdown bearing includes an inner race of the rotary shaft side, and an outer race facing the inner race via rolling elements, and
the housing includes a baffle plate which closes a gap between the inner race and the outer race of the touchdown bearing.
